# EUROPEAN PATENT APPLICATION

(11) **EP 3 043 061 A1**
(43) Date of publication of application: **13.07.2016**
(21) Application number: 15194860.1
(22) Date of filing: 17.11.2015
(51) Int. Cl.: F02M 35/10, F02M 25/06, F02M 25/08

(54) **INTAKE SYSTEM FOR INTERNAL COMBUSTION ENGINE**

(30) Priority: 08.01.2015 JP 2015002248
(71) Applicant: AISIN SEIKI KABUSHIKI KAISHA, Kariya-shi, Aichi 448-8650 (JP)
(72) Inventor: YANO, Hideto, Kariya-shi, Aichi 448-8650 (JP)
(74) Representative: Kramer Barske Schmidtchen Patentanwälte PartG mbB

(57) **Abstract**

An intake system (100) for an internal combustion engine (1) includes plural intake pipes (21) being configured to be connected to cylinders (1c) of a main body (1a) of the internal combustion engine (1), respectively, an external gas distribution portion (30) distributing a single type of an external gas to each of the plural intake pipes (21), a main body (90) of the intake system (100) including the plural intake pipes (21) and the external gas distribution portion (30), and an external gas introduction passage (40) being integrally formed with the main body (90) of the intake system (100), the external gas introduction passage (40) being configured to connect the main body (1a) of the internal combustion engine (1) to the external gas distribution portion (30) of the main body (90) of the intake system (100), the external gas introduction passage (40) serving as a single passage being configured to introduce the external gas from the main body (1a) of the internal combustion engine (1) to the external gas distribution portion (30).

## Description

### TECHNICAL FIELD

This disclosure generally relates to an intake system for an internal combustion engine.

### BACKGROUND DISCUSSION

A known intake system for an internal combustion engine including intake pipes that are connected to the internal combustion engine is disclosed in JP2014-145259A (hereinafter referred to as Patent reference 1).

An intake manifold (an intake system for the internal combustion engine) including a chamber (a surge tank) and branch pipes (intake pipes) is disclosed in Patent reference 1. A hose-shaped blow-by gas introduction pipe of the intake manifold connects a crankcase that is positioned at a lower portion of the internal combustion engine to an intake pipe that is positioned close to the surge tank. Accordingly, a blow-by gas (an external gas) generated within the crankcase is introduced to the surge tank.

However, according to the intake manifold disclosed in Patent reference 1, the intake manifold cannot be downsized because the blow-by gas introduction pipe is desired to be spaced apart from a main body of the intake manifold by a predetermined distance for preventing the main body of the intake manifold and the blow-by gas introduction pipe from being rubbed with each other. Because the blow-by gas introduction pipe is exposed to an external air (a wind generated when a vehicle runs), a pipe passage may be blocked by a moisture vapor within the blow-by gas, the moisture vapor that is frozen when an outside air temperature level is low.

A need thus exists for an intake system for an internal combustion engine that can be downsized and that can prevent an external gas introduction passage from being blocked because of a water that is frozen when an outside air temperature level is low.

### SUMMARY

According to an aspect of this disclosure, an intake system for an internal combustion engine includes plural intake pipes being configured to be connected to cylinders of a main body of the internal combustion engine, respectively, an external gas distribution portion distributing a single type of an external gas to each of the plural intake pipes, a main body of the intake system including the plural intake pipes and the external gas distribution portion, and an external gas introduction passage being integrally formed with the main body of the intake system, the external gas introduction passage being configured to connect the main body of the internal combustion engine to the external gas distribution portion of the main body of the intake system, the external gas introduction passage serving as a single passage being configured to introduce the single type of the external gas from the main body of the internal combustion engine to the external gas distribution portion.

According to the aforementioned construction, as described above, because the external gas introduction passage is integrally formed with the main body of the intake system, unlike a case where the engine main body and the external gas distribution portion are connected with each other by a component, for example, a hose, the intake system for the internal combustion engine can be downsized. Because the external gas introduction passage is integrally formed with the main body of the intake system for the internal combustion engine, a surface area of the external gas introduction passage being exposed to an external air (for example, a wind generated when a vehicle runs), can be reduced. Accordingly, a moisture (a moisture vapor) within the external gas (blow-by gas) is unlikely to be frozen when an outside air temperature level is low. Thus, the external gas introduction passage can be prevented from being blocked. The external gas introduction passage serving as the single passage is connected to the external gas distribution portion that distributes the single type of the external gas (blow-by gas). Thus, only the single type of the external gas is introduced to the external gas distribution portion via the external gas introduction passage serving as the single passage. Accordingly, unlike a case where multiple types of the external gas are mixed within the external gas introduction passage and are introduced to the external gas distribution portion, the external gas can be introduced to the external gas distribution portion in a state where the introduction amount of the external gas required by the engine is securely controlled.

According to another aspect of this disclosure, the external gas introduction passage includes a first gas introduction passage portion being provided at an outer surface of the main body of the intake system, the first gas introduction passage portion configuring the single passage, and a second gas introduction passage portion being connected to the first gas introduction passage portion and being provided so as to be positioned inside the main body of the intake system, the second gas introduction passage portion configuring the single passage.

According to the aforementioned construction, because the second gas introduction passage portion is positioned inside the main body of the intake system for the internal combustion engine, the second gas introduction passage portion serving as the single passage is contained in the main body of the intake system for the internal combustion engine. Accordingly, a cross sectional area of a flow passage of second gas introduction passage portion can be reduced. The intake system for the internal combustion engine can be downsized easily. Because only an outer surface of the first gas introduction passage portion of the external gas introduction passage (the second gas introduction passage portion is not included) serving as the single passage is exposed to the external air (a wind), the outer surface area can be reduced. Accordingly, the moisture (the water vapor) within the blow-by gas can be effectively prevented from being frozen when the outside air temperature level is low.

According to still further aspect of this disclosure, the external gas introduction passage is integrally formed with the main body of the intake system by a joint of the first gas introduction passage portion being made from a resin member for the external gas introduction passage relative to the main body of the intake system and the second gas introduction passage portion, the second gas introduction portion being made from a resin member for the main body of the intake system.

According to the aforementioned construction, the external gas introduction passage serving as the single passage, the single passage that is generated by a joint of the two resin members for the main body of the intake system, can be integrally formed with the main body of the intake system for the internal combustion engine by a vibration welding process or a die slide injection molding process (a DSI molding process). Because the resin members for the main body of the intake system for the internal combustion engine and the resin member for the external gas introduction passage are made of resin, the weight of the intake system for the internal combustion engine can be reduced.

According to another aspect of this disclosure, the second gas introduction passage portion of the main body of the intake system is configured to be connected to the main body of the internal combustion engine via a control valve controlling a flow of the external gas.

According to the aforementioned construction, the second gas introduction passage portion is connected to a gas passage portion of a cylinder head via the control valve. At least one of the second gas introduction passage portion that is contained in the main body of the intake system for the internal combustion engine and the engine main body (the gas passage portion) covers the control valve mores space than the other. Accordingly, the control valve can be positioned in the external gas introduction passage in a state where an outer circumferential portion of the control valve is not exposed to the external air (for example, the wind generated when the vehicle runs) as much as possible. Thus, the control valve can be effectively prevented from malfunctioning because the control valve is frozen when the outside air temperature level is low.

According to still further aspect of this disclosure, the single type of the external gas corresponds to a blow-by gas.

According to the aforementioned construction, because the moisture (the water vapor) flown from a crank chamber is prevented from being frozen within the external gas introduction passage, the ventilation within the engine main body (the crank chamber) can be performed normally when the outside air temperature level is low.

According to further aspect of this disclosure, the intake system for the internal combustion engine further includes a vaporized fuel gas introduction passage being provided separately from the external gas introduction passage. The main body of the intake system includes a surge tank being configured to be connected to a throttle valve. The vaporized fuel gas introduction passage is configured to introduce a vaporized fuel gas generated within a fuel tank to a position close to an inlet of the surge tank, the inlet being configured to be positioned at a downstream of the throttle valve.

According to the aforementioned construction, because the vaporized fuel gas introduction passage introducing (mixing) the vaporized fuel gas to (with) an intake air is positioned close to an intake opening of the surge tank, the vaporized fuel gas can be uniformly mixed with the intake air within the surge tank. The intake air is mixed with the vaporized fuel gas at a position (close to the intake opening) different from the external gas introduction passage introducing the blow-by gas to the external gas distribution portion. Accordingly, comparing to a case where the vaporized fuel gas and the blow-by gas are introduced to the main body of the intake system for the internal combustion engine at the same position, the respective introduction amounts (the introduction ratio) of the vaporized fuel gas and of the blow-by gas relative to each other can be controlled appropriately.

According to another aspect of this disclosure, the external gas introduction passage serving as the single passage includes an inner surface having a down grade and being configured to be inclined downwardly from the external gas distribution portion to the main body of the internal combustion engine.

According to the aforementioned construction, the external gas introduction passage includes the inner surface that is configured to be tilted, or inclined downwardly from a connection opening that is connected to the external gas distribution portion towards a connection opening that is connected to the cylinder head (the gas passage portion). Accordingly, in a case where an oil mist of the blow-by gas is adhered to the inner surface and is turned into a liquid, the liquid can be flown on the inner surface. Thus, a liquid oil can be returned to the crank chamber without being retained, or held at the external gas introduction passage.

According to still another aspect of this disclosure, the plural intake pipes are positioned next to each other along a cylinder bank. The second gas introduction passage portion is provided between a set of the intake pipes that are positioned next to each other, the second gas introduction passage portion being provided so as to be positioned inside the main body of the intake system.

According to the aforementioned construction, the second gas introduction passage portion is positioned inside the main body of the intake system for the internal combustion engine, the second gas introduction passage portion that is positioned between the set of the intake passages that are positioned next to each other. Accordingly, the external gas introduction passage can be provided at the main body of the intake system for the internal combustion engine such that the space between the set of the intake passages that are positioned next to each other is effectively used. Thus, the main body of the intake system for the internal combustion engine can be prevented from upsizing.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a view schematically illustrating a structure of an engine that is mounted with an intake system according to an embodiment disclosed here;
Fig. 2 is a perspective view illustrating the whole structure of the intake system according to the embodiment;
Fig. 3 is an exploded perspective view illustrating the construction of the intake system according to the embodiment;
Fig. 4 is a view of the intake system when seen from a side where a throttle valve is positioned according to the embodiment;
Fig. 5 is a view of the intake system when seen from a side where a cylinder head is positioned according to the embodiment; and
Fig. 6 is a cross sectional view illustrating a blow-by gas introduction passage of the intake system according to the embodiment.

### DETAILED DESCRIPTION

An embodiment of this disclosure will hereunder be explained with reference to the drawings.

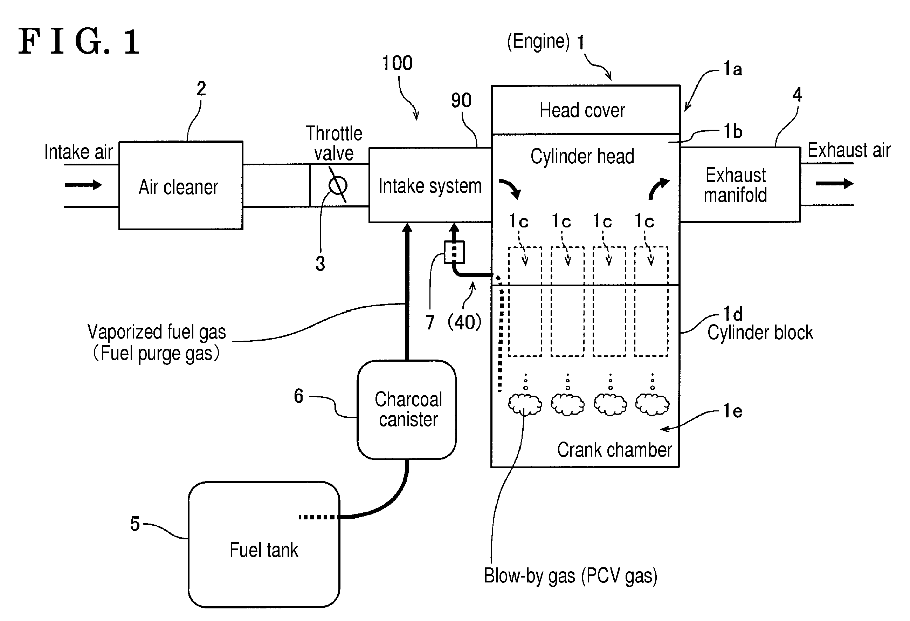

A structure of an intake system 100 (i.e., serving as an intake system for an internal combustion engine) of the embodiment will hereunder be explained with reference to Figs. 1 to 6.

As shown in Fig. 1, the intake system 100 is mounted on an in-line four cylinder engine 1 for a vehicle. An intake air is flown to the intake system 100 via an air cleaner 2 and a throttle valve 3. The air flown to the intake system 100 is introduced to each cylinder (cylinders 1 c) of an engine main body 1 a (i.e., serving as a main body of an internal combustion engine) via the intake system 100. An exhaust gas after combustion is exhausted to an outside via an exhaust manifold 4 being provided at a downstream of a cylinder head 1 b.

The intake system 100 mixes a blow-by gas (i.e., serving as a single type of an external gas) and a vaporized fuel gas with the intake air and introduces the mixture of the blow-by gas and a vaporized fuel gas with the intake air to each of the cylinders (the cylinders 3). That is, the blow-by gas being leaked from the cylinders 1c being positioned within a cylinder block 1d to a crank chamber 1e that is positioned below the cylinders 1c is returned to the intake system 100 and is recirculated. The vaporized fuel gas (fuel purge gas) generated within a fuel tank 5 is supplied to an engine 1 (i.e., serving as an internal combustion engine) (a combustion chamber) via a charcoal canister 6 and the intake system 100.

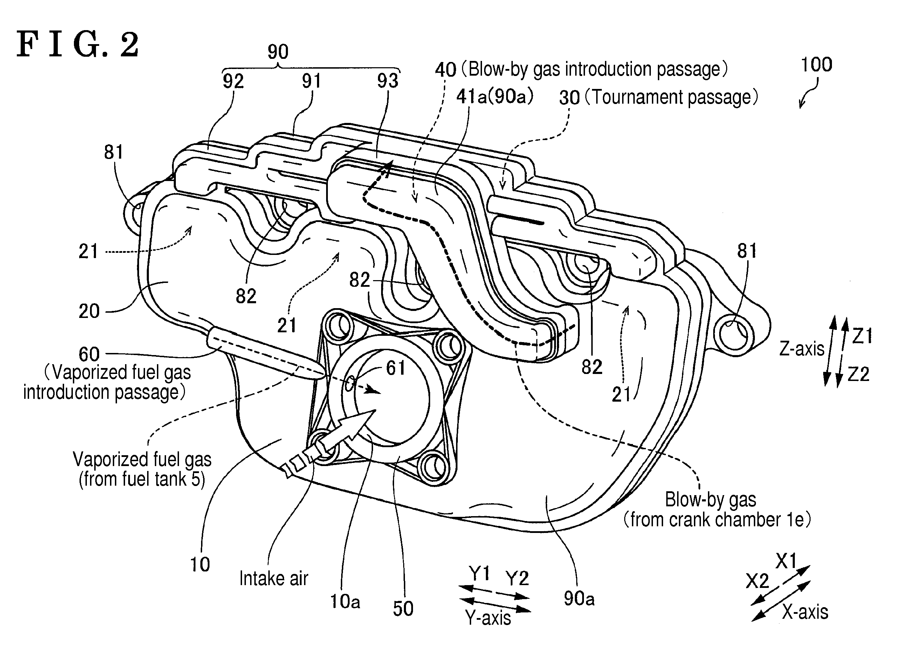

As shown in Fig. 2, the intake system 100 includes a main body 90 (i.e., serving as a main body of the intake system). The main body 90 is provided with a surge tank 10, an intake pipe portion 20 and a tournament passage 30 (i.e., serving as an external gas distribution portion), the tournament passage 30 that is divided into two at the first connection opening 43, and is further divided into two at the downstream. The surge tank 10 includes an intake opening 10a. The intake pipe portion 20 includes plural intake passages 21 (i.e., serving as an intake pipe) that are positioned at (connected to) the downstream of the surge tank 10. The tournament passage 30 distributes the blow-by gas to the intake pipe portion 20.

The four intake passages 21 of the intake pipe portion 20, for example, are connected to an intake port that is provided at the cylinder head 1b (see Fig. 1). Thus, the air within the surge tank 10 flows in the intake pipe portion 20 and is equally divided into, four example, four. Then the air is supplied to each of the cylinders 1c (see Fig. 1).

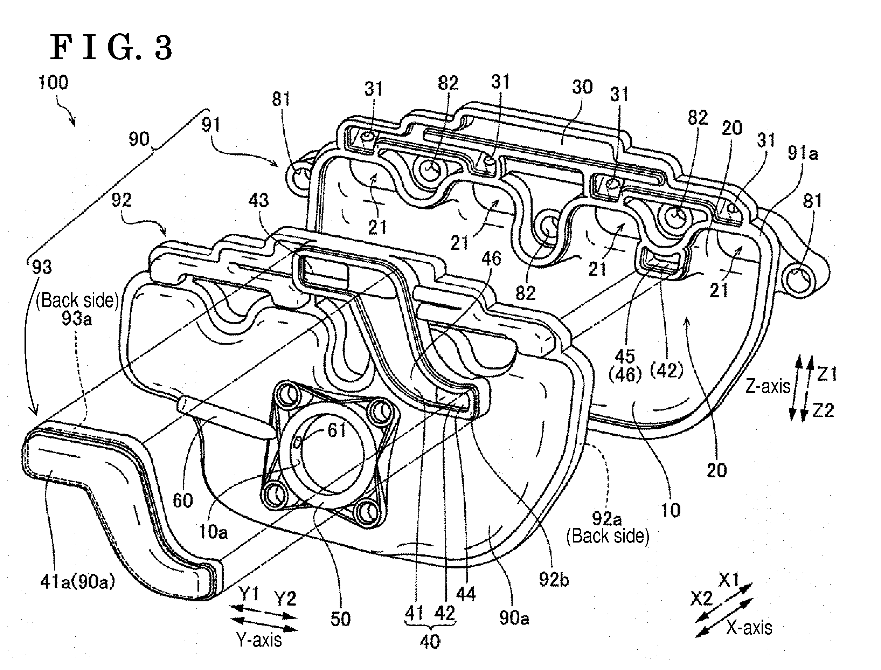

As shown in Fig. 3, the main body 90 of the intake system 100 is manufactured with a first resin member 91 (i.e., serving as a resin member for the main body of the intake system) and a second resin member 92 (i.e., serving as a resin member for the main body of the intake system) that are overlapped and joined, or connected with each other. That is, a first ribbed joint portion 91a is positioned at an end in a X1 direction in Fig. 3. A second ribbed joint portion 92a is positioned frontward of the first joint portion 91 a in Fig. 3. The first joint portion 91 a of the first resin member 91 and the second joint portion 92a of the second resin member 92 are vibration-welded with each other in a state where the first joint portion 91 a and the second joint portion 92a face with each other to form the surge tank 10, the intake pipe portion 20 and the tournament passage 30. Accordingly, the surge tank 10, the intake pipe portion 20 and the tournament passage 30 are integrally formed and include a passage where a fluid (for example, the intake air or the blow-by gas) is flown inside the surge tank 10, the intake pipe portion 20 and the tournament passage 30.

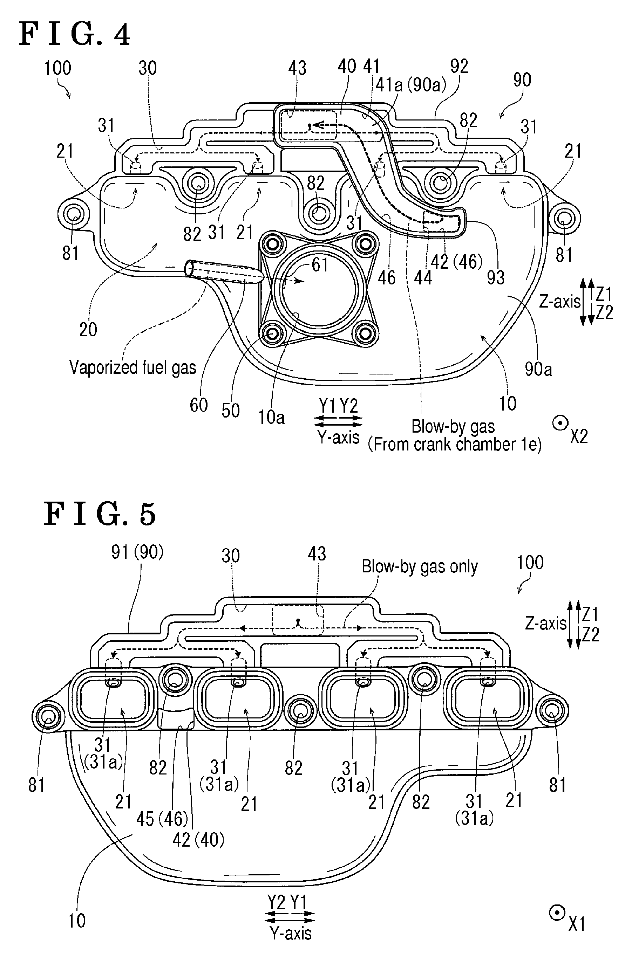

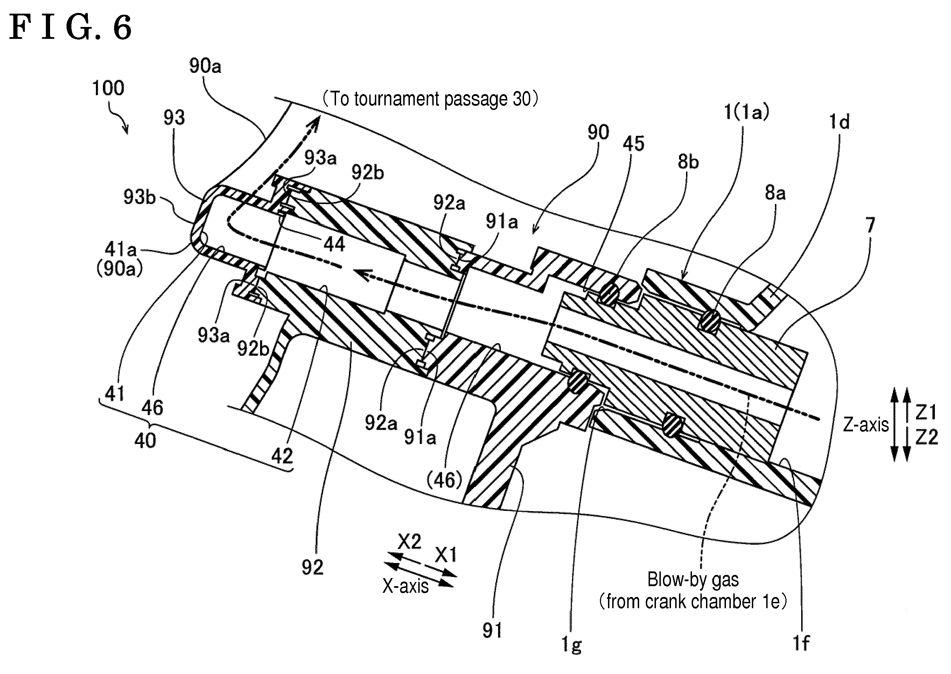

Here, according to the embodiment, as shown in Figs. 3 and 4, the intake system 100 includes a blow-by gas introduction passage 40 (i.e., serving as an external gas introduction passage). The blow-by gas introduction passage 40 is integrally formed with the main body 90 of the intake system 100 instead of being formed by a hose member. The blow-by gas introduction passage 40 is provided as a single passage (a pipe passage) that connects the crank chamber 1 e (see Fig. 6) of the engine 1 to the tournament passage 30 of the main body 90 of the intake system 100.

Specifically, as shown in Fig. 3, a third ribbed joint portion 93a of the third resin member 93 (i.e., serving as a resin member for the external gas introduction passage) is positioned at an end in a X2 direction. A fourth ribbed joint portion 92b of the second resin member 92 and the third ribbed joint portion 93a of the third resin member 93 are vibration-welded with each other in a state where the fourth joint portion 92b and the third joint portion 93a face with each other. Accordingly, the blow-by gas introduction passage 40 is formed (completed). The blow-by gas introduction passage 40 that serves as the single passage introduces only the blow-by gas from the crank chamber 1 e (see Fig. 6) to the tournament passage 30.

As such, because the first, second and third resin members 91, 92, 93 are joined, the main body 90 of the intake system 100 (see Fig. 2) includes the blow-by gas introduction passage 40. The first, second and third resin members 91, 92, 93 are each made of a thermos plastic synthetic resin (for example, a nylon-type resin including a glass fiber).

A detailed structure of the external gas introduction passage (blow-by gas introduction passage 40) will hereunder be explained. As shown in Figs. 3, 4 and 6, the blow-by gas introduction passage 40 includes a first passage 41 (i.e., serving as a first gas introduction passage portion) and a second passage 42 (i.e., serving as a second gas introduction passage portion). In this case, because the second resin member 92 is joined with the third resin member 93, the first passage 41 extending along a first outer surface 90a of the main body 90 of the intake system 100, the first outer surface 90a that is positioned in the X2 direction, is provided. The first passage 41 serves as the single passage that does not include a partition plate. Because the second resin member 92 is joined with the first resin member 91, the second passage 42 being positioned inside the main body 90 of the intake system 100 is provided. The second passage 42 is connected to an upstream of the first passage 41 (a side where the crank chamber 1e (see Fig. 1) is positioned). The second passage 42 is positioned inside the main body 90 of the intake system 100 along a surface being formed in the X-axis direction orthogonal to a Y-Z surface, or a surface being configured by a Y-axis and a Z-axis.

Only a second outer surface 41 a of the blow-by gas introduction passage 40, the second outer surface 41 a that corresponds to the first passage 41, is a part of the first outer surface 90a of the main body 90 of the intake system 100. That is, the blow-by gas being flown in the first passage 41 is influenced by the outside air temperature level (the wind generated when the vehicle runs) to some extent via the second outer surface 41 a. Meanwhile, the blow-by gas flown in the second passage 42 that is positioned at the upstream of the first passage 41 is not influenced by the outside air temperature level (the wind) because the second passage 42 is contained by the main body 9 of the intake system 100.

As shown in Fig. 3, the first passage 41 is connected to the tournament passage 30. Specifically, the first passage 41 includes a first connection opening 43 at a rim portion of the downstream of the first passage 41 (opposite to the second passage 42). The first passage 41 and the tournament passage 30 are communicated with each other via the first connection opening 43. The second passage 42 includes a second connection opening 44 at an end portion of the downstream of the second passage 42 (opposite to the crank chamber 1e (see Fig. 1)). The second passage 42 and the first passage 41 are communicated with each other via the second connection opening 44. The second passage 42 and a gas passage portion 1f (see Fig. 6) extending from the crank chamber 1e are communicated with each other via a third connection opening 45. Thus, as shown in Fig. 6, a portion from an outlet of the crank chamber 1e to an inlet of the tournament passage 30 via the gas passage portion 1f is formed with the single passage.

As shown in Fig. 6, in a state where the main body 90 of the intake system 10 is mounted on the engine main body 1a (the cylinder head 1b), the blow-by gas introduction passage 40 includes an inner surface 46. The inner surface 46 has a down grade and is tilted, or inclined from the tournament passage 30 towards the cylinder block 1 d.

In this case, the first connection opening 43 (see Fig. 4) serving as the downstream end of the first passage 41 is positioned at a highest position. The inner surface 46 has the down grade (downward sloping) from the first passage 41 to the second connection opening 44, the second passage 42 and the third connection opening 45 in the aforementioned order towards the upstream (the upstream in a flowing direction of the blow-by gas). The second connection opening 44 of the blow-by gas introduction passage 40 is provided at a position where an extending direction of the second passage 42 and an extending direction of the first passage 41 are orthogonal to each other. As shown in Fig. 5, the second passage 42 is positioned between the set of the intake passage 21 that is positioned in the Y2 direction and the intake passage 21 that is positioned in the Y1 direction, the intake passages 21 that are positioned next to each other. The second passage 42 is provided inside the main body 90 of the intake system 100.

According to the embodiment, as shown in Fig. 6, the blow-by gas introduction passage 40 is connected to the engine main body 1a via a positive crankcase ventilation valve 7, or a PCV valve 7 (i.e., serving as a control valve). The PCV valve 7 serves as a check valve and controls the exhaust amount of the blow-by gas. The PCV valve 7 opens in accordance with the pressure level difference in a case where the pressure level of the blow-by gas introduction passage 40 is lower than the pressure level of the crank chamber 1 e (see Fig. 1).

Specifically, the gas passage portion 1f extending from the crank chamber 1 e (see Fig. 1) to inside the cylinder block 1d is provided inside the cylinder head 1 b. The PCV valve 7 including a metal-made main body is positioned in an outlet 1g of the gas passage portion 1f by a predetermined length via a first seal member 8a. A second seal member 8b is fitted in a portion of the PCV valve 7, the portion being exposed from the outlet 1g of the gas passage portion 1f. In a case where the main body 90 of the intake system 100 is mounted to the engine main body 1a, the PCV valve 7 is positioned inside an end range of the second passage 42 of the blow-by gas introduction passage 40 via the second seal member 8b.

In a state where the PCV valve 7 is positioned inside the end range of the second passage 42, the main body 90 of the intake system 100 is fixed to the cylinder head 1 b (see Fig. 1) by a fastener member. Thus, the blow-by gas introduction passage 40 (the second passage 42) is connected to the engine main body 1 a (the crank chamber 1 e) via the PCV valve 7.

The tournament passage 30 is positioned at a space (a passage) that is formed by a part of the third joint portion 93a of the third resin member 93 and by a part of the fourth joint member 92b of the second resin member 92. As shown in Figs. 4 and 5, the tournament passage 30 is divided into two at the first connection opening 43, and is further divided into two at the downstream. Thus, the blow-by gas introduced from the blow-by gas introduction passage 40 via the first connection opening 43 is divided hierarchically towards the downstream and is introduced to a position corresponding to each of the four intake passages 21.

The tournament passage 30 includes, for example, four introduction holes 31 that are provided at the first resin member 91 corresponding to, for example, four downstream end portions. Thus, the respective downstream end portions of the tournament passage 30 and the respective intake passages 21 are communicated with each other via the respective introduction holes 31. The introduction holes 31 are provided to be substantially equally spaced apart from each other.

As shown in Fig. 5, the introduction hole 31 is positioned from a side where the tournament passage 30 is positioned to an inner surface of the intake passage 21. The introduction hole 31 is positioned within the inner surface of the intake passage 21. The introduction hole 31 is provided linearly in a state where the introduction hole 31 is tilted in an intake flow direction (the X1 direction) so that an opening rim 31 a faces an exit (the X1 direction) of the intake passage 21 that is positioned at an inner circumference of the intake passage 21. The opening rim 31 a protrudes to an inside of the intake passage 21.

As shown in Fig. 2, the main body 90 of the intake system 100 includes a valve mounted portion 50 that is mounted with the throttle valve 3 (see Fig. 1). The valve mounted portion 50 is integrally formed with the second resin member 92 that corresponds to a downward range (a Z2 direction) of the blow-by gas introduction passage 40 (the first passage 41). The surge tank 10 includes the intake opening 10a (i.e., serving as an inlet) circularly opening at the valve mounted portion 50. Thus, the intake air reaching the intake opening 10a via the throttle valve 3 is flown to the surge tank 10 via the intake opening 10a.

According to the embodiment, a vaporized fuel gas introduction passage 60 is provided at the valve mounted portion 50. The vaporized fuel gas introduction passage 60 is integrally formed with the second resin member 92 so as to be positioned inside the second resin member 92 from a side of the valve mounted portion 50. The vaporized fuel gas introduction passage 60 is communicated with the intake opening 10a via a vaporized fuel gas introduction opening 61. The vaporized fuel gas introduction passage 60 is connected to the charcoal canister 6 (see Fig. 1) via a pipe.

Accordingly, the vaporized fuel gas introduction passage 60 introduces the vaporized fuel gas that is generated within the fuel tank 5 (see Fig. 1) and that is supplied via the charcoal canister 6 to a position close to the intake opening 10a of the surge tank 10 being positioned at the downstream of the throttle valve 3 (see Fig. 1). Thus, the vaporized fuel gas is introduced to (mixed with) the intake air before flowing in the surge tank 10.

As shown in Fig. 3, first mounting holes 81 are provided at opposing end portions of the first resin member 91 in the Y-axis direction, respectively, the opposing end portions where, for example, the four intake passages 21 are positioned next to one another. For example, a second mounting hole 82 is provided between the set of the intake passages 21 that are positioned next to each other. For example, three of the second mounting holes 82 are provided. The main body 90 of the intake system 100 is fixed to the cylinder head 1 b (see Fig. 1) by fixing members that are inserted into two of the first mounting holes 81 and three of the second mounting holes 82. The intake system 100 of the embodiment is structured as mentioned above.

According to the embodiment, following effects and advantages may be attained.

According to the embodiment, because the blow-by gas introduction passage 40 is integrally formed with the main body 90 of the intake system 100, unlike a case where the engine main body 1 a and the tournament passage 30 are connected with each other by a component, for example, a hose, the intake system 100 can be downsized. Because the blow-by gas introduction passage 40 is integrally formed with the main body 90 of the intake system 100, a surface area of the blow-by gas introduction passage 40, the surface area that is exposed to the external air (for example, the wind generated when the vehicle runs), can be reduced. Accordingly, moisture (water vapor) within the blow-by gas is unlikely to be frozen when the outside air temperature level is low. Thus, the blow-by gas introduction passage 40 can be prevented from being blocked.

According to the embodiment, the blow-by gas introduction passage 40 serving as the single passage is connected to the tournament passage 30 that distributes the blow-by gas. Thus, only the blow-by gas is introduced to the tournament passage 30 via the single blow-by gas introduction passage 40. Accordingly, unlike a case where multiple types of the external gas are mixed within the blow-by gas introduction passage 40 and are introduced to the tournament passage 30, the blow-by gas can be introduced to the tournament passage 30 in a state where the gas introduction amount required by the engine 1 is securely controlled.

According to the embodiment, because the moisture (the water vapor) flown from the crank chamber 1 e is prevented from being frozen within the blow-by gas introduction passage 40, the ventilation within the engine main body 1a (the crank chamber 1e) can be performed normally when the outside air temperature level is low.

According to the embodiment, because the second passage 42 is positioned inside the main body 90 of the intake system 100, the second passage 42 serving as the single passage is contained in the main body 90 of the intake system 100. Accordingly, a cross sectional area of a flow passage of the second passage 42 can be reduced. Thus, the intake system 100 can be downsized easily. Because only the outer surface 41 a of the first passage 41 of the blow-by gas introduction passage 40 (the second passage 42 is not included) serving as the single passage is exposed to the external air (the wind), the outer surface area can be reduced. Accordingly, the moisture (the water vapor) within the blow-by gas can be effectively prevented from being frozen when the outside air temperature level is low.

According to the embodiment, the blow-by gas introduction passage 40 serving as the single passage can be easily integrally formed with the main body 90 of the intake system 100 by the joint of the first and second resin members 91, 92 and by the vibration welding process. Because the first, second and third resin members 91, 92, 93 are made of resin, the weight of the intake system 100 can be reduced.

According to the embodiment, the second passage 42 is connected to the gas passage portion 1f of the cylinder head 1 b via the PCV valve 7. At least one of the second passage 42 that is contained in the main body 90 of the intake system 100 and the engine main body 1 a (the gas passage portion 1f) covers the PCV valve 7 more space than the other. Accordingly, the PCV valve 7 can be positioned in the blow-by gas introduction passage 40 in a state where an outer circumferential portion of the PCV valve 7 is not exposed to the external air (for example, the wind generated when the vehicle runs) as much as possible. Thus, the PCV valve 7 can be effectively prevented from malfunctioning because the PCV valve 7 is frozen when the outside air temperature level is low.

According to the embodiment, because the vaporized fuel gas introduction passage 60 introducing (mixing) the vaporized fuel gas to (with) the intake air is positioned close to the intake opening 10a of the surge tank 10, the vaporized fuel gas can be uniformly mixed with the intake air within the surge tank 10. The intake air is mixed with the vaporized fuel gas at a position (close to the intake opening 10a) different from the blow-by gas introduction passage 40 introducing the blow-by gas to the tournament passage 30. Accordingly, comparing to a case where the vaporized fuel gas and the blow-by gas are introduced to the main body 90 of the intake system 100 at the same position, the respective introduction amounts (the introduction ratio) of the vaporized fuel gas and of the blow-by gas relative to each other can be controlled appropriately.

According to the embodiment, the blow-by gas introduction passage 40 includes the inner surface 46 that is tilted, or inclined downwardly from the first connection opening 43 towards the third connection opening 45, the first connection opening 43 that is connected to the tournament passage 30, the third connection opening 45 that is connected to the cylinder head 1b (the gas passage portion 1f). Accordingly, in a case where an oil mist of the blow-by gas is adhered to the inner surface 46 and is turned into a liquid, the liquid can be flown on the inner surface 46. Thus, a liquid oil can be returned to the crank chamber 1e without being retained, or held at the blow-by gas introduction passage 40.

According to the embodiment, the second passage 42 is positioned inside the main body 90 of the intake system 100, the second passage 42 that is positioned between the set of the intake passages 21 that are positioned next to each other. Accordingly, the blow-by gas introduction passage 40 can be provided at the main body 90 of the intake system 100 for the engine 1 such that the space between the set of the intake passages 21 that are positioned next to each other is effectively used. Thus, the main body 90 of the intake system 100 can be prevented from upsizing.

Modified examples of the embodiment will hereunder be explained.

For example, according to the embodiment, the intake system 100 is mounted to the in-line four cylinder engine 1. Alternatively, the intake system 100 can be mounted to an in-line multi cylinder engine other than the in-line four cylinder engine 1. The intake system 100 can be mounted to a V-shaped multi cylinder engine or to a horizontally opposed engine. The intake system 100 can be applied to an intake system that is mounted to an internal combustion engine of a fixed equipment besides an engine (an internal combustion engine) being mounted on the vehicle.

According to the aforementioned embodiment, the blow-by gas introduction passage 40 introduces the blow-by gas (the PCV gas). Alternatively, the external gas of this disclosure can be an exhaust gas recirculation gas (an EGR gas). Accordingly, this invention is applicable to an exhaust gas recirculation gas introduction passage, or an EGR gas introduction passage for introducing the EGR gas serving as a part of the exhaust gas exhausted from the cylinder.

According to the aforementioned embodiment, the blow-by gas introduction passage 40 is provided with the first passage 41 and the second passage 42. Alternatively, the blow-by gas introduction passage 40 can be provided with only the first passage 41 (the second passage 42) as long as the blow-by gas introduction passage 40 is integrally formed with the main body 90 of the intake system 100.

According to the aforementioned embodiment, the vaporized fuel gas introduction passage 60 is provided at the valve mounted portion 50. Alternatively, the vaporized fuel gas introduction passage 60 can be positioned at the surge tank 10 or the intake pipe portion 20 other than the position of the valve mounted portion 50 as long as the vaporized fuel gas introduction passage 60 can introduce (mix) the vaporized fuel gas to (with) the intake air at a position different from where the blow-by gas flows.

According to the aforementioned embodiment, the second passage 42 is connected to the gas passage portion 1f of the cylinder head 1 b via the PCV valve. Alternatively, the main body 90 of the intake system 100 may be configured such that the second passage 42 of the blow-by gas introduction passage 40 is directly connected to the cylinder block 1d (the crank chamber 1e) via the PCV valve.

According to the aforementioned embodiment, the tournament passage 30 in which the flow passage is divided hierarchically is connected to the blow-by gas introduction passage 40. Alternatively, for example, the main body 90 of the intake system 100 can be configured such that the blow-by gas introduction passage 40 is connected to an external gas distribution portion that is provided to be divided into four pipes from a single chamber.

According to the aforementioned embodiment, the main body 90 of the intake system 100 including the blow-by gas introduction passage 40 is made of resin. Alternatively, each of the blow-by gas introduction passage 40 and the main body 90 of the intake system 100 can be made of metal as long as the blow-by gas introduction passage 40 is integrally formed with the main body 90 of the intake system 100.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An intake system (100) for an internal combustion engine (1), comprising:
a plurality of intake pipes (21) being configured to be connected to cylinders (1c) of a main body (1 a) of the internal combustion engine (1), respectively;
an external gas distribution portion (30) distributing a single type of an external gas to each of the plurality of intake pipes (21);
a main body (90) of the intake system (100) including the plurality of intake pipes (21) and the external gas distribution portion (30); and
an external gas introduction passage (40) being integrally formed with the main body (90) of the intake system (100), the external gas introduction passage (40) being configured to connect the main body (1 a) of the internal combustion engine (1) to the external gas distribution portion (30) of the main body (90) of the intake system (100); the external gas introduction passage (40) serving as a single passage being configured to introduce the single type of the external gas from the main body (1 a) of the internal combustion engine (1) to the external gas distribution portion (30).

2. The intake system (100) for the internal combustion engine (1) according to claim 1, wherein
the external gas introduction passage (40) includes
a first gas introduction passage portion (41) being provided at an outer surface (90a) of the main body (90) of the intake system (100), the first gas introduction passage portion (41) configuring the single passage; and
a second gas introduction passage portion (42) being connected to the first gas introduction passage portion (41) and being provided so as to be positioned inside the main body (90) of the intake system (100), the second gas introduction passage portion (42) configuring the single passage.

3. The intake system (100) for the internal combustion engine (1) according to claim 2, wherein the external gas introduction passage (40) is integrally formed with the main body (90) of the intake system (100) by a joint of the first gas introduction passage portion (41) being made from a resin member (93) for the external gas introduction passage (40) relative to the main body (90) of the intake system (100) and the second gas introduction passage portion (42), the second gas introduction portion (42) being made from a resin member (91, 92) for the main body (90) of the intake system (100).

4. The intake system (100) for the internal combustion engine (1) according to either claim 2 or 3, wherein the second gas introduction passage portion (42) of the main body (90) of the intake system (100) is configured to be connected to the main body (1 a) of the internal combustion engine (1) via a control valve (7) controlling a flow of the external gas.

5. The intake system (100) for the internal combustion engine (1) according to any one of claims 1 to 4, wherein the single type of the external gas corresponds to a blow-by gas.

6. The intake system (100) for the internal combustion engine (1) according to any one of claims 1 to 5, further comprising:
a vaporized fuel gas introduction passage (60) being provided separately from the external gas introduction passage (40); wherein
the main body (90) of the intake system (100) includes a surge tank (10) being configured to be connected to a throttle valve (3); and
the vaporized fuel gas introduction passage (60) is configured to introduce a vaporized fuel gas generated within a fuel tank (5) to a position close to an inlet (10a) of the surge tank (10), the inlet (10a) being configured to be positioned at a downstream of the throttle valve (3).

7. The intake system (100) for the internal combustion engine (1) according to any one of claims 1 to 6, wherein the external gas introduction passage (40) serving as the single passage includes an inner surface (46) having a down grade and being configured to be inclined downwardly from the external gas distribution portion (30) to the main body (1 a) of the internal combustion engine (1).

8. The intake system (100) for the internal combustion engine (1) according to any one of claims 2 to 7, wherein
the plurality of intake pipes (21) are positioned next to each other along a cylinder bank;
and
the second gas introduction passage portion (42) is provided between a set of the intake pipes (21) that are positioned next to each other, the second gas introduction passage portion (42) being provided so as to be positioned inside the main body (90) of the intake system (100).
